# EUROPÄISCHE PATENTANMELDUNG

(11) **EP 1 887 240 A1**
(43) Veröffentlichungstag der Anmeldung: **13.02.2008**
(21) Anmeldenummer: 06118827.2
(22) Anmeldetag: 11.08.2006
(51) Int. Cl.: F16D 23/02

(54) **Synchronring**

(71) Anmelder: Sulzer Euroflamm Germany GmbH, 28719 Bremen (DE)
(72) Erfinder: Spreckels, Dr., Marcus, 28359 Bremen (DE)
(74) Vertreter: Sulzer Management AG

(57) **Zusammenfassung**

Die Erfindung betrifft einen Synchronring (1), insbesondere Innensynchronring, für eine Synchronisiereinrichtung eines schaltbaren Zahnräderwechselgetriebes, umfassend einen Synchronringkörper (2) mit einer Reibfläche (3) und einer Abstützfläche (4), wobei sich die Reibfläche (3) und die Abstützfläche (4) derart in Umfangsrichtung um eine axiale Synchronringachse (5) des Synchronrings (1) erstrecken, dass ein Flächennormalenvektor (6) der Abstützfläche (4) parallel zur Synchronringachse (5) liegt und sich die Reibfläche (3) unter einem vorgebbaren Reibwinkel (α) konisch um die Synchronringachse (5) erstreckt. Der Synchronringkörper (2) weist eine Verstärkung (7), insbesondere eine radiale Verstärkung (7) auf, die sich in Umfangsrichtung in einer vorgebbaren Breite angrenzend an die Abstützfläche (4) erstreckt. Erfindungsgemäss ist dabei die Abstützfläche (4) von einer Ausnehmung (8) im Synchronringkörper (2) unterbrochen.

## Beschreibung

Die Erfindung betrifft einen Synchronring, insbesondere Innensynchronring für eine Synchronisiereinrichtung eines schaltbaren Zahnräderwechselgetriebes gemäss dem Oberbegriff des unabhängigen Anspruchs 1.

Synchronringe dienen in einem mechanischen schaltbaren Zahnräderwechselgetriebe, z.B. in Fahrzeuggetrieben dazu, die während eines Gangwechsels auftretenden Relativgeschwindigkeiten zwischen Gangrad und Getriebewelle aneinander anzugleichen. Die Synchronisation wird dabei durch Reibung zwischen den entsprechenden Reibpartner erzielt. Die Funktionsweise solcher Getriebe und der Ablauf des Synchronisationsvorgangs sind an sich bekannt und brauchen dem Fachmann hier nicht mehr näher erläutert zu werden.

Zum Schutz gegen vorzeitigen Verschleiss und / oder zur Verbesserung der Reibcharakteristik ist es bekannt, die Reibflächen von Synchronringen, die in der Regel aus einem Metall oder einer Metallegierung, wie beispielsweise aus Messing oder Stahl gefertigt sind, mit einer Reibschicht zu versehen. Dabei sind ganz verschiedene Typen von Reibschichten im Gebrauch, z.B. thermische Spritzschichten aus Molybdän, Carbon-Reibschichten oder Reibschichten aus anderen Materialien.

Durch immer grösser werdende Belastungen, die im Betriebszustand auf die Synchronringe einwirken, sind jedoch nicht nur immer grössere Anforderungen an die Eigenschaften der Reibflächen gestellt, sondern auch die Festigkeit und Eigensteifigkeit der Synchronringe als solches, d.h. des Synchronringkörpers sind zunehmend Gegenstand aktueller Fortentwicklungen im Getriebebau.

In der DE 197 13 304 B4 ist beispielsweise ein Synchronring offenbart, der aus einem dünnwandigen, durchhärtbaren Stahlband spanlos geformt ist, wobei an einer Anlagefläche bzw. an von der Reibfläche abstehenden Bereichen des Synchronrings unter Beibehaltung des Traganteils der Reibfläche Mittel zur Versteifung vorgesehen sind.

Dabei können die Mittel zur Versteifung gemäss DE 197 13 304 B4 durch verschiedene Massnahmen realisiert sein, z.B. durch einen Festbord, der von einem Rand der Reibfläche ausgehend einen radial nach innen gerichteten Bord bildet, oder ein freies Ende des Synchronrings kann stirnseitig mit einer die Wandstärke vergrössernden Prägung oder Stauchung versehen sein.

Obwohl durch die in der DE 197 13 304 B4 diskutierten Massnahmen eine Erhöhung der Festigkeit und Steifigkeit des Synchronrings erzielbar ist, haben alle dort gezeigten Lösungen einen entscheidenden Nachteil, der insbesondere daraus resultiert, dass als zentrales Merkmal dieser Synchronringe zwingend die Beibehaltung des Traganteils der Reibfläche gefordert wird, ganz gleich auf welche Art und Weise bzw. mit welchen Massnahmen die Versteifung des Synchronrings vorzunehmen ist.

Bei dieser Art von Synchronringen ist nämlich zu befürchten, dass im Betriebszustand, insbesondere unter hohen Belastungen und / oder wenn sehr schnelle Schaltvorgänge des Getriebes gefordert sind, eine nur ungenügende Schmierung zwischen der Anlagefläche des Synchronrings und seinem Gegenpart stattfindet. Das liegt unter anderem daran, dass beim Synchronisationsvorgang durch axialen Druck auf die Anlagefläche des Synchronrings zu viel Öl in radiale Richtung verdrängt wird, so dass die Anlagefläche, die sich mit einer bestimmten Relativgeschwindigkeit in Bezug auf ihren Gegenpart drehend bewegt, mehr oder weniger ohne Schmierung mit ihrem Gegenpart in reibendem Kontakt steht, was zu vorzeitigem Verschleisserscheinungen an Synchronring und dessen Gegenpart, im schlimmsten Fall unter starken Belastungen zu spontanen Beschädigungen der entsprechenden Flächen führt.

Die Aufgabe der Erfindung ist es daher, einen verbesserten Synchronring bereit zustellen, der einerseits eine hohe Festigkeit und Eigensteifigkeit aufweist und gleichzeitig eine ausreichende Schmierung zwischen der Anlagefläche und ihrem Gegenpart während des Synchronisationsvorgangs gewährleistet.

Die diese Aufgaben lösenden Gegenstände der Erfindung sind durch die Merkmale des unabhängigen Anspruchs 1 gekennzeichnet.

Die abhängigen Ansprüche beziehen sich auf besonders vorteilhafte Ausführungsformen der Erfindung.

Die Erfindung betrifft somit einen Synchronring, insbesondere Innensynchronring, für eine Synchronisiereinrichtung eines schaltbaren Zahnräderwechselgetriebes, umfassend einen Synchronringkörper mit einer Reibfläche und einer Abstützfläche, wobei sich die Reibfläche und die Abstützfläche derart in Umfangsrichtung um eine axiale Synchronringachse des Synchronrings erstrecken, dass ein Flächennormalenvektor der Abstützfläche parallel zur Synchronringachse liegt und sich die Reibfläche unter einem vorgebbaren Reibwinkel konisch um die Synchronringachse erstreckt. Der Synchronringkörper weist eine Verstärkung, insbesondere eine radiale Verstärkung auf, die sich in Umfangsrichtung in einer vorgebbaren Breite angrenzend an die Abstützfläche erstreckt. Erfindungsgemäss ist dabei die Abstützfläche von einer Ausnehmung im Synchronringkörper unterbrochen.

Wesentlich für die Erfindung ist es, dass die Abstützfläche durch eine Ausnehmung im Synchronringkörper unterbrochen ist. Durch die Ausnehmung ist die zur Verfügung stehende Reibfläche zwar leicht reduziert, jedoch gewährleistet die erfindungsgemässe Ausnehmung, dass im Betriebszustand, also während des Synchronisationsvorgangs, wenn die Abstützfläche mit ihrem Gegenpart in reibendem Kontakt steht, weil sich die Abstützfläche mit einer bestimmten Relativgeschwindigkeit in Bezug auf ihren Gegenpart dreht, auch unter hohem axialen Druck, der während des Synchronisationsvorgangs von dem Gegenpart der Abstützfläche auf die Abstützfläche übertragen wird, sich eine hydrodynamische Schmierung aufbauen kann, die zuverlässig Schäden durch zu hohe Reibungsbeanspruchung verhindert.

Während des Synchronisationsvorgangs haftet der Schmierölfilm sowohl an der Abstützfläche des Synchronrings, als auch an der Oberfläche des Gegenparts, die einen hohen axialen Druck auf den Synchronring ausübt, während sich die Abstützfläche und die entsprechende Oberfläche des Gegenparts gleichzeitig mit einer bestimmten Relativgeschwindigkeit um eine gemeinsame Achse gegeneinander drehen.

Die erfindungsgemässen Ausnehmungen bilden dabei in den Bereichen der Abstützfläche, in denen die Ausnehmungen vorgesehen sind, ein Vorratsreservoir für eine gewisse Menge Schmieröl, das, da das Schmieröl gleichzeitig an der Abstützfläche und der Oberfläche des Gegenparts haftet, durch die relative Drehung dieser beiden Flächen gegeneinander, mitbewegt wird und in Richtung der Drehung aus der Ausnehmung heraus in einen sich verengenden Spalt, zwischen der Abstützfläche und der Oberfläche des Gegenparts gepresst wird, wodurch sich eine hydrodynamische Schmierung aufbaut, die die Abstützfläche und die Oberfläche des Gegenparts zuverlässig während des Synchronisationsvorgangs voneinander trennt, so dass keine schädliche Reibung zwischen den beiden Partnern mehr auftritt.

Bei einer bevorzugten Ausführungsform ist eine an sich bekannte Verdrehsicherung an einer der Abstützfläche gegenüber liegenden Seite des Synchronringkörpers vorgesehen.

In einem für die Praxis besonders wichtigen Ausführungsbeispiel ist die Verstärkung auf einer der Reibfläche gegenüber liegenden Seite am Synchronringkörper ausgebildet und die Verstärkung ist bevorzugt durch eine vergrösserte Wandstärke des Synchronringkörpers gebildet. Die Verstärkung kann dabei z.B. durch eine Prägung und / oder Stauchung des Synchronringkörpers in axialer Richtung im Bereich der Abstützfläche erreicht werden, so dass im Bereich der Abstützfläche eine etwas grössere Wandstärke des Synchronringkörpers erreicht wird, so dass eine Versteifung bzw. Verstärkung des Synchronrings erzielbar ist.

In einem anderen Ausführungsbeispiel kann die Verstärkung beispielsweise auch durch eine Festbord erreicht werden, der von einem Rand der Reibfläche ausgehend einen radial nach innen gerichteten Bord bildet oder die Verstärkung kann sich in jeder anderen geeigneten Art und Weise in Umfangsrichtung in einer vorgebbaren Breite angrenzend an die Abstützfläche erstrecken.

Ein erfindungsgemässer Synchronring kann dabei sowohl als Innensynchronring als auch als Aussensynchronring ausgestaltet sein, d.h. es kann eine äussere Umfangsfläche und / oder eine innere Umfangsfläche als Reibfläche ausgestaltet sein.

In einem für die Praxis besonders wichtigen Ausführungsbeispiel der vorliegenden Erfindung ist die Ausnehmung im Synchronringkörper eine bogenförmige Ausnehmung, insbesondere eine halbkreisförmige Ausnehmung.

Es versteht sich, dass je nach Anforderung die Ausnehmung im Synchronringkörper auch jede andere geeignete Form haben kann. So kann die Ausnehmung im Speziellen z.B. auch eine dreieckförmige Ausnehmung sein.

Insbesondere dann, wenn ein sehr stabiler hydrodynamischer Schmierfilm und / oder wenn im Schmierfilm ein hoher Druck aufgebaut werden muss, kann eine Kontur der Ausnehmung in eine Umfangsrichtung, die im Betriebszustand einer Drehrichtung des Synchronrings entspricht, eine kleinere Steigung aufweisen, als eine Steigung, die die Kontur in der entgegen gesetzten Umfangsrichtung aufweist. Dadurch verengt sich der Spalt, in den das Schmieröl im Betriebszustand durch Drehung gepresst wird, über eine kürzere Distanz, so dass ein schnellerer und / oder stärkerer Druckaufbau im Schmierölfilm zwischen Abstützfläche und der Oberfläche des Gegenparts der Abstützfläche aufgebaut werden kann.

Je nach Anwendung kann die Reibfläche mit einer Verschleiss mindernden und / oder einer reibungsoptimierten Reibschicht versehen ist. Die Reibschicht kann dabei z.B. eine thermische Spritzschicht aus Molybdän, eine Carbon-Reibschicht oder jede andere geeignete Reibschicht sein, die die Reibeigenschaften eines erfindungsgemässen Synchronrings verbessert.

Der Synchronring ist dabei bevorzugt ein spanlos, aus einem dünnwandigen Stahlband geformter Synchronring, der als ein tiefgezogenes Bleichteil ausgebildet ist, und ist aus einem Stahl, vorzugsweise aus C55, C80 oder C80M Stahl, bevorzugt C35 oder C45 Stahl und / oder einem anderen geeigneten Metall und / oder einer geeigneten Metallegierung, z.B. Messing gefertigt.

Im Folgenden wird die Erfindung an Hand der schematischen Zeichnung näher erläutert. Es zeigen:
- Fig. 1: ein Ausführungsbeispiel eines erfindungsgemässen Synchronrings im Schnitt;
- Fig. 2: eine Seitenansicht eines Synchronrings gemäss Fig. 1;
- Fig. 3: eine Ansicht auf die Abstützfläche des Synchronrings gemäss Fig. 1;
- Fig. 4: eine Ansicht gemäss Fig. 3 auf die der Abstützfläche gegenüberliegende Seite;
- Fig. 5: ein anderes Ausführungsbeispiel eines erfindungsgemässen Synchronrings.

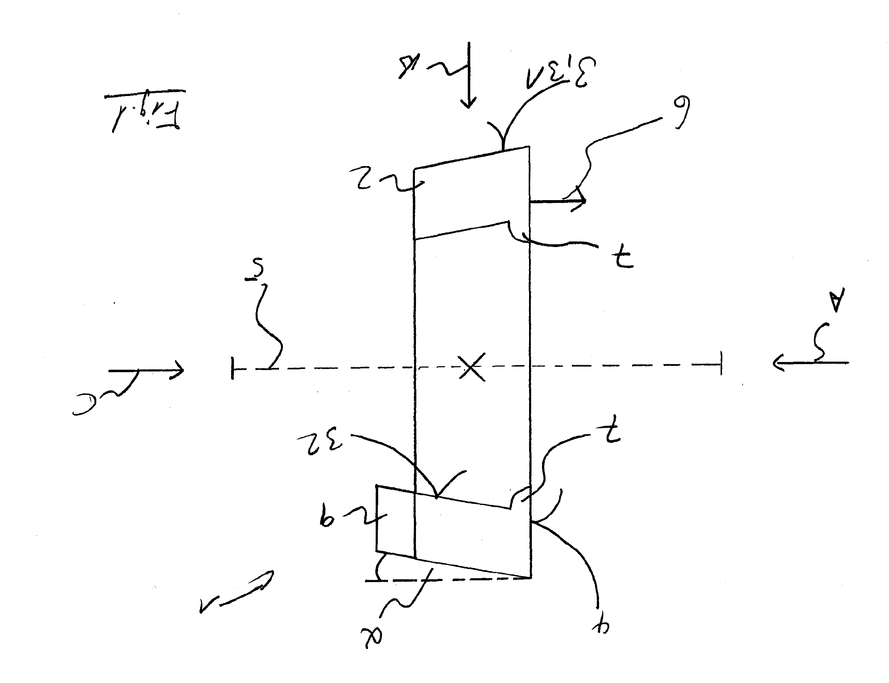

Fig. 1 zeigt in einer schematischen Darstellung im Schnitt ein Ausführungsbeispiel eines erfindungsgemässen Synchronrings, der im Folgenden gesamthaft mit dem Bezugszeichen 1 bezeichnet wird. Dabei bezeichnen gleiche Bezugszeichen in den verschiedenen Figuren technisch äquivalente Merkmale bzw. beziehen sich auf Merkmale mit technisch gleicher Funktion.

Der Synchronring 1 der Fig. 1 umfasst einen Synchronringkörper 2 mit einer Reibfläche 3 und einer Abstützfläche 4. Die Reibfläche 3 erstreckt sich in an sich bekannter Weise unter dem Reibwinkel α konisch um die Synchronringachse 5. Die Abstützfläche 4 ist durch eine im wesentlichen kreisringförmige Fläche des Synchronringkörpers 2 gebildet, die eine darstellungsgemäss linke Endfläche des Synchronrings 1 bildet und deren Flächennormalenvektor 6 parallel zur Synchronringachse 5 liegt. Bei dem in Fig. 1 exemplarisch dargestellten Beispiel handelt es sich um einen Innensynchronring, dessen Reibfläche 3 durch die äussere Umfangsfläche 31 gebildet ist, während die innere Umfangsfläche 32 nicht als Reibfläche ausgebildet ist. Zur Sicherung gegen Verdrehung sind in an sich bekannter Weise an einer der Abstützfläche 4 gegenüberliegenden Seite des Synchronringkörpers 2 mehrere Verdrehsicherungen 9 vorgesehen, von denen in Fig. 1 nur eine sichtbar ist.

Im Bereich der Abstützfläche 4 ist eine Verstärkung 7 vorgesehen, die im vorliegenden Beispiel durch eine Stauchung des Synchronringkörpers 2 in axialer Richtung, d.h. in Richtung des Pfeils A, im Bereich der Abstützfläche 4 erzeugt wurde, so dass im Bereich der Abstützfläche 4 eine etwas grössere Wandstärke des Synchronringkörpers 2 erreicht ist, wodurch eine Versteifung bzw. Verstärkung des Synchronrings erfolgt.

Die Ausnehmungen gemäss der Erfindung, die im Betriebszustand den Aufbau des hydrodynamischen Schmierfilms bewirken bzw. unterstützen, sind aufgrund der Perspektive der Darstellung in Fig. 1 nicht zu sehen und werden daher in den nachfolgenden Figuren näher diskutiert.

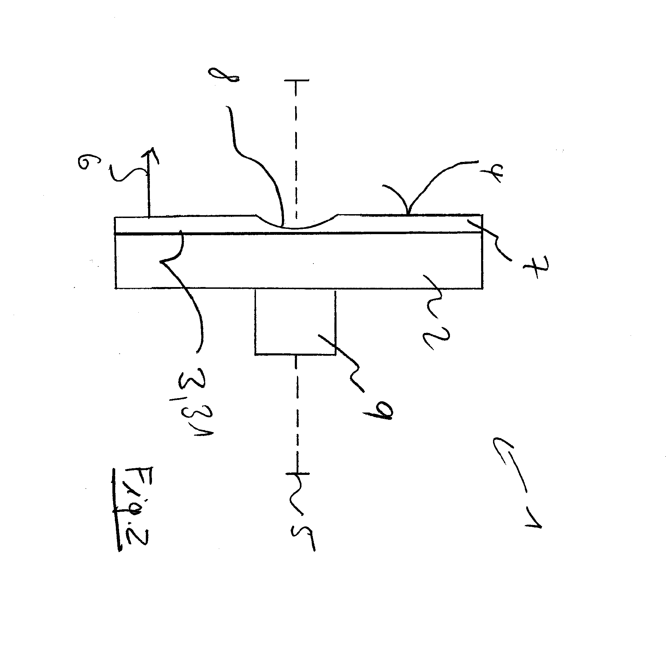

In Fig. 2 ist eine Aufsicht auf den Synchronring 1 aus Richtung des Pfeils B gemäss Fig. 1 dargestellt. Die Perspektive in Fig. 1 ist dabei so gewählt, dass die äussere Umfangsfläche 31, also die Reibfläche 3 in einem Bereich zu sehen ist, in dem gerade eine der mehreren erfindungsgemässen Ausnehmungen 8 zu sehen ist, die in der Darstellung der Fig. 1 verdeckt waren und die im vorliegenden Beispiel halbkreisförmige Ausnehmungen sind, eine Form, die in der Praxis besonders vorteilhaft Verwendung findet.

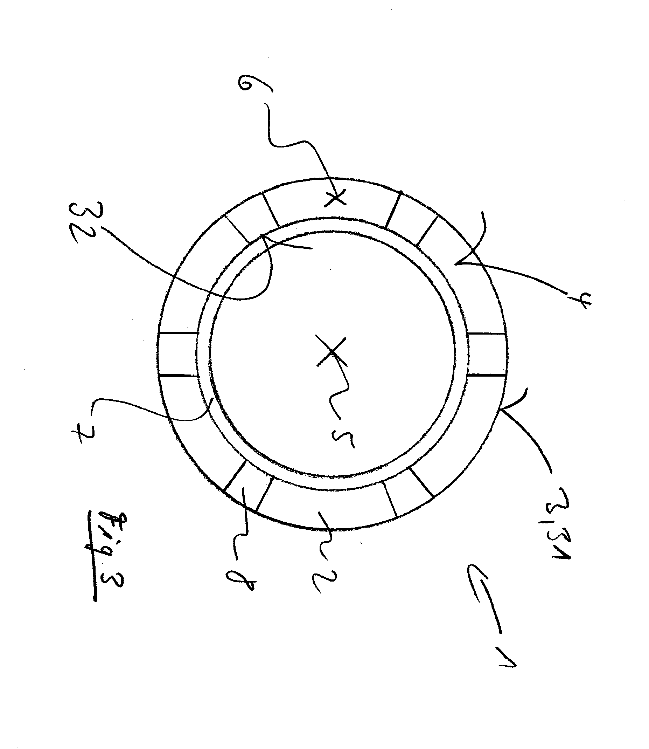

Fig. 3 zeigt eine Darstellung des Synchronrings 1 der Fig. 1 aus Richtung des Pfeils A gemäss Fig. 1, also in Richtung der Synchronringachse 5, d.h. die Darstellung der Fig. 1 ist gerade so gewählt, dass die Abstützfläche 4 in der Zeichenebene liegt. Der Synchronring 1 hat insgesamt sechs Ausnehmungen 8, die gleichmässig, also unter gleichem Abstand, im Synchronringkörper 2 über die Abstützfläche 4 verteilt sind, und diese somit an den entsprechenden Stellen unterbrechen. Es versteht sich, dass in einem anderen Ausführungsbeispiel auch mehr oder weniger als sechs Ausnehmungen 8 vorgesehen sein können, und dass in speziellen Fällen die Ausnehmungen 8 auch nicht in jeweils gleichem Abstand zueinander angeordnet sein müssen und / oder ein und derselbe Synchronring 1 auch gleichzeitig mit verschiedenen Ausnehmungen 8 versehen sein kann, die unterschiedliche Konturen haben. Z.B. kann ein und derselbe Synchronring 1 gleichzeitig bogenförmige und dreickförmige Ausnehmungen 8 haben.

Zusehen ist als innerer Kreisring auch die Verstärkung 7, die, da der Synchronringkörper 2 in radialer Richtung nach innen im Bereich der Verstärkung 7 eine grössere Wandstärke aufweist, in Fig. 3 ebenfalls zu sehen ist.

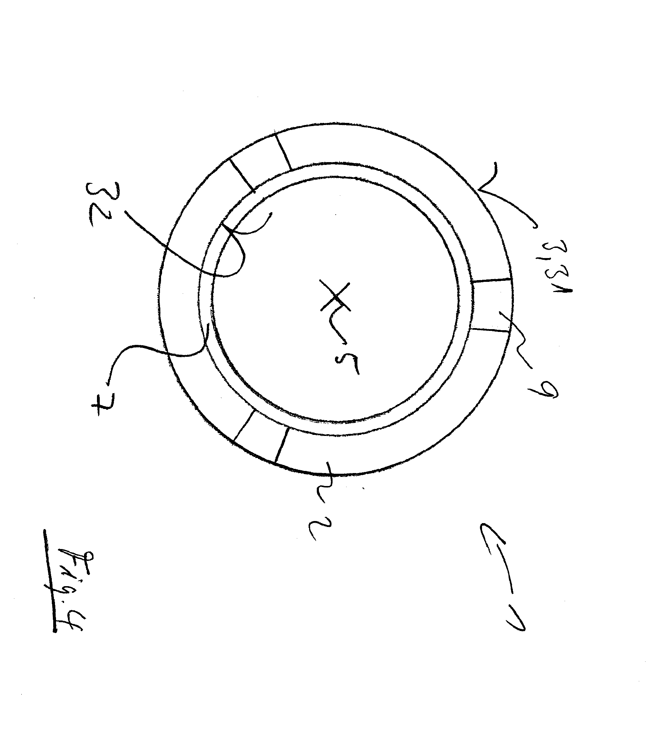

Fig. 4 zeigt schliesslich den Synchronring 1 der Fig. 1 aus Richtung des Pfeils C gemäss Fig. 1, dass heisst, in Fig. 4 ist ein Blick auf die der Abstützfläche 4 gegenüberliegende Seite des Synchronrings 1 dargestellt. Zu sehen sind drei Verdrehsicherungen 9, die in gleichem Abstand zueinander angeordnet sind, und jeweils gleiche Form haben, d.h. gleichartig ausgestaltet sind. Es versteht sich, dass in einem anderen Ausführungsbeispiel auch mehr oder weniger als drei Verdrehsicherungen 9 vorgesehen sein können und dass im Speziellen die Verdrehsicherungen auch nicht gleich beabstandet angeordnet sein müssen und / oder bei ein und demselben Synchronring auch verschiedenartig ausgestaltete Verdrehsicherungen 9 vorgesehen sein können.

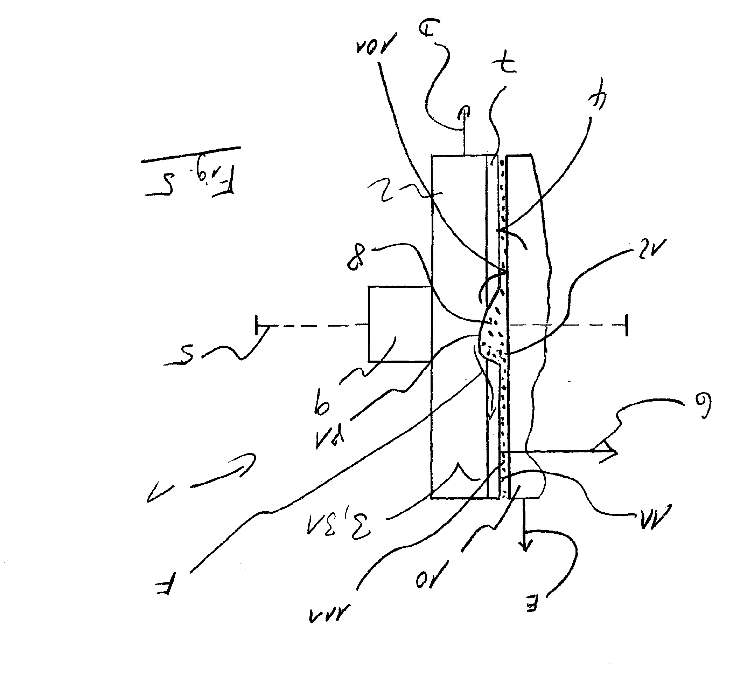

In Fig. 5 ist schliesslich ein anderes Ausführungsbeispiel eines erfindungsgemässen Synchronrings 1 im Betriebszustand mit seinem Gegenpart 10 dargestellt, wobei der Gegenpart nur teilweise im Schnitt zu sehen ist und dessen Oberfläche 101 über den Schmierölfilm 111 in reibendem Kontakt mit der Abstützfläche 4 des Synchronrings 1 steht.

Die Ausnehmung 8 ist dabei eine asymmetrische Ausnehmung 8, d.h. eine Kontur 81 der Ausnehmung 8 weist in eine Umfangsrichtung D des Synchronrings 1 in Richtung von der Abstützfläche 4 weg eine kleinere Steigung auf, als eine Steigung, die die Kontur 81 in der entgegen gesetzten Umfangsrichtung E aufweist.

Wie bereits oben erläutert, verengt sich dadurch der Spalt 12, in den das Schmieröl 11 im Betriebszustand durch die Relativdrehung zwischen Abstützfläche 4 und Oberfläche 101 des Gegenparts 10 in Richtung des Pfeils F gepresst wird, über eine kürzere Distanz, so dass ein schnellerer und / oder stärkerer Druckaufbau im Schmierölfilm 111 zwischen Abstützfläche 4 und der Oberfläche 101 des Gegenparts 10 der Abstützfläche 4 aufgebaut werden kann, so dass eine deutlich verbesserte Schmierung zwischen Abstützfläche 4 und Oberfläche 101 des Gegenparts 10 erreichbar ist.

Es versteht sich, dass alle in dieser Anmeldung explizit diskutierten Ausführungsbeispiele nur exemplarisch für die Erfindung zu verstehen sind und insbesondere auch alle geeigneten Kombinationen, die für spezielle Anwendungen vorteilhaft eingesetzt werden können, bzw. alle dem Fachmann nahe liegenden Weiterbildungen durch die Erfindung erfasst sind.

## Patentansprüche

1. Synchronring, insbesondere Innensynchronring, für eine Synchronisiereinrichtung eines schaltbaren Zahnräderwechselgetriebes, umfassend einen Synchronringkörper (2) mit einer Reibfläche (3) und einer Abstützfläche (4), wobei sich die Reibfläche (3) und die Abstützfläche (4) derart in Umfangsrichtung um eine axiale Synchronringachse (5) des Synchronrings erstrecken, dass ein Flächennormalenvektor (6) der Abstützfläche (4) parallel zur Synchronringachse (5) liegt und sich die Reibfläche (3) unter einem vorgebbaren Reibwinkel (α) konisch um die Synchronringachse (5) erstreckt, wobei der Synchronringkörper (2) eine Verstärkung (7), insbesondere eine radiale Verstärkung (7) aufweist, die sich in Umfangsrichtung in einer vorgebbaren Breite angrenzend an die Abstützfläche (4) erstreckt, **dadurch gekennzeichnet, dass** die Abstützfläche (4) von einer Ausnehmung (8) im Synchronringkörper (2) unterbrochen ist.

2. Synchronring nach Anspruch 1, wobei eine Verdrehsicherung (9) an einer der Abstützfläche (4) gegenüber liegenden Seite des Synchronringkörpers (2) vorgesehen ist.

3. Synchronring nach Anspruch 1 oder 2, wobei die Verstärkung (7) auf einer der Reibfläche (3) gegenüber liegenden Seite am Synchronringkörper (2) ausgebildet ist.

4. Synchronring nach einem der vorangehenden Ansprüche, wobei eine äussere Umfangsfläche (31) und / oder eine innere Umfangsfläche (32) als Reibfläche (3) ausgestaltet ist.

5. Synchronring nach einem der vorangehenden Ansprüche, wobei die Verstärkung (7) durch eine vergrösserte Wandstärke des Synchronringkörpers (2) gebildet ist.

6. Synchronring nach einem der vorangehenden Ansprüche, wobei die Ausnehmung (8) im Synchronringkörper (2) eine bogenförmige Ausnehmung (8), insbesondere eine halbkreisförmige Ausnehmung (8) ist.

7. Synchronring nach einem der vorangehenden Ansprüche, wobei die Ausnehmung (8) im Synchronringkörper (2) eine dreieckförmige Ausnehmung ist.

8. Synchronring nach einem der vorangehenden Ansprüche, wobei eine Kontur (81) der Ausnehmung in eine Umfangsrichtung (D), eine kleinere Steigung aufweist, als eine Steigung, die die Kontur (81) in der entgegen gesetzten Umfangsrichtung (E) aufweist.

9. Synchronring nach einem der vorangehenden Ansprüche, wobei die Reibfläche (3) mit einer Verschleiss mindernden und / oder einer reibungsoptimierten Reibschicht versehen ist.

10. Synchronring nach einem der vorangehenden Ansprüche, wobei der Synchronring aus einem Stahl, vorzugsweise aus C55, C80 oder C80M Stahl, insbesondere aus C35 oder C45 Stahl gefertigt ist.
